# EUROPEAN PATENT SPECIFICATION

(11) **EP 2 543 894 B1**
(45) Date of publication and mention of the grant of the patent: **20.04.2016**
(21) Application number: 12174353.8
(22) Date of filing: 29.06.2012
(51) Int. Cl.: F16B 7/04

(54) **Method for producing an element for connection of the tubular elements making up a structure and connection element produced by means of said method**
Verfahren zur Herstellung eines Verbindungselementes für rohrförmige Elemente zur Erstellung einer Struktur und entsprechendes Verbindungselement
Elément d'assemblage en matière composite pour pièces tubulaires ainsi que procédé et dispositif de manufacture

(30) Priority: 04.07.2011 IT VI20110179
(43) Date of publication of application: 09.01.2013
(73) Proprietor: Moretto, Alfredino, 36027 Rosa' (VI) (IT)
(72) Inventor: Moretto, Alfredino, 36027 Rosa' (VI) (IT)
(74) Representative: Bonini, Ercole

(56) References cited:
- DE-A1-102006 020 437
- GB-A- 744 294
- GB-A- 191 115 929
- US-A- 3 062 570
- US-A- 4 136 985
- US-A- 4 968 176
- US-A- 5 274 981

## Description

The present invention concerns a connection element that can be used to mutually connect a plurality of tubular elements in order to form a structure.

It is known that some structures, for example those used for fitting out trade-fair stands, are obtained by mutually connecting a plurality of tubular elements by means of corresponding corner elements.

A corner element of known type comprises a plurality of seats suited to house the ends of the same number of tubular elements making up the structure, which can be fixed to the corner element by means of screws or other fastening means of known type.

Typically, the corner element comprises three seats configured so as to house three corresponding tubular elements arranged in mutually orthogonal directions.

According to a known embodiment, the corner element is produced from a metal sheet which is bent to form a dihedron, on the edges of which projections are welded which provide the seats for the tubular elements.

This type of corner element poses the drawback of being relatively laborious to produce, as it requires welding of the above-mentioned projections.

Moreover, the welded parts pose the further drawback of reducing the resistance of the corner element, as they are more easily subject to breakage. According to a different embodiment, the corner element is obtained by means of moulding of plastic material.

This variant nevertheless poses the drawback of having a relatively limited structural resistance, which may be inadequate for the formation of some particularly large and/or heavy structures.

Consequently, this plastic variant is not particularly attractive in commercial terms, in particular on the market of supporting structures for non-domestic use.

Another embodiment is disclosed in US 3,062,570, which shows a corner element achieved through cutting and folding a blank.

The present invention aims to overcome all the above-mentioned drawbacks that are typical of the known art.

In particular, the object of the present invention is to produce a corner element for structures with a high structural resistance, so that it can be used in applications for which a plastic corner element is not suitable.

A further object of the invention is to provide a method that allows a corner element for structures to be produced in a simpler, quicker and cheaper manner compared to the methods of known type, the structural resistance being equal.

The above-mentioned objects are achieved by a method for the production of a corner element for structures in accordance with claim 1.

The above-mentioned objects are furthermore achieved by a corner element or connection element for structures which can be obtained with the above-mentioned method, in accordance with claim 8, as well as by a shaped laminar body suitable for obtaining the corner element in accordance with claim 7.

Further details and characteristics of the method of the invention are provided in the dependent claims.

Advantageously, the method of the invention makes it possible to reduce the time required for production of the corner element, therefore reducing its cost.

The objects and the advantage mentioned above will be highlighted during the description of some preferred embodiments of the invention which are provided by way of non-limiting example with reference to the following accompanying drawings, in which:
- fig. 1 shows an axonometric view of a corner element not according to the invention;
- fig. 2 shows a plan view of the corner element of fig. 1, during one phase of the method;
- fig. 3 shows an embodiment of the corner element of fig. 1 in a plan view, during one phase of the method of the invention.

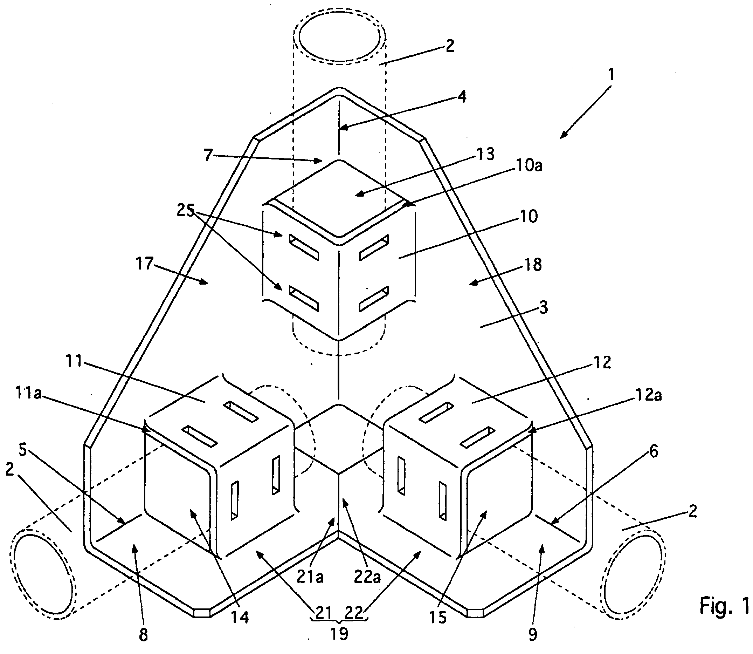

The method of the invention is described with reference to a connection element **1** shown in fig. 1, suitable to mutually connect a plurality of tubular elements **2** making up a structure.

Fig. 1 shows only the ends of the tubular elements **2** which, for the sake of clarity, are indicated by a broken line.

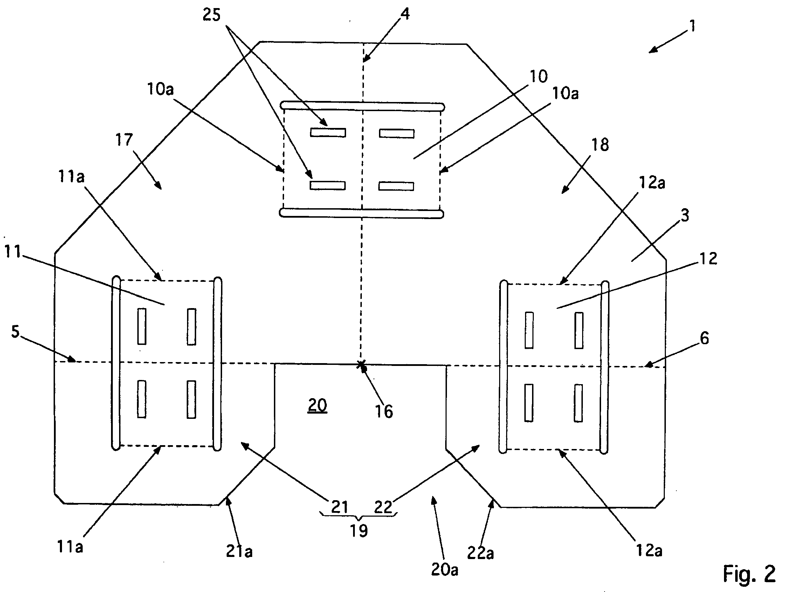

According to the method of the invention, to make the connection element **1** a substantially flat shaped laminar body **3** is provided, made of a plastically deformable material, as shown in fig. 2.

Preferably but not necessarily, the above-mentioned shaped laminar body **3** is obtained by shearing a metal sheet, for example made of steel.

Obviously, variant embodiments of the method of the invention may entail the use of materials other than the one described above, on condition that they are plastically deformable.

According to the method, the shaped laminar body **3** is bent along the bending lines **4, 5, 6** indicated by the broken line in fig. 2, thus defining three concave areas **7, 8, 9,** in each one of which a respective tubular element **2** can be rested.

Preferably, two of the above-mentioned bending lines **5** and **6** are aligned with each other in a direction perpendicular to the other bending line **4.**

In this way, after bending, the three concave areas **7, 8, 9** extend in three corresponding directions orthogonal to one another and allow three tubular elements **2** to be mutually arranged at right angles.

Again preferably, the bending lines **4, 5, 6** converge in one single intersection point **16,** highlighted in fig. 2 by a cross, and delimit three corresponding portions **17, 18,19** in the shaped laminar body **3.**

It is moreover evident that, in variant embodiments, the bending lines **4, 5, 6** can have configurations that are different from the one described above, according to the preferred arrangement to be given to the tubular elements **2.**

Preferably but not necessarily, the shaped laminar body **3** presents a perimeter profile that is symmetrical with respect to a first bending line **4** and the remaining two bending lines **5, 6** are arranged symmetrically with respect to the first bending line **4.**

According to the method of the invention, in the shaped laminar body **3** it is made a pair of cuts **4a-4a, 5a-5a, 6a-6a** at the level of each bending line **4, 5, 6,** the cuts of each pair being mainly developed along trajectories that intersect the corresponding bending line **4, 5, 6.**

In this way, each pair of cuts **4a-4a, 5a-5a, 6a-6a** delimits laterally a corresponding strip **10, 11, 12** of material which remains connected to the shaped laminar body **3** at the level of two opposite edges **10a, 11a, 12a.**

The method comprises the further operation of lifting each strip **10, 11, 12** towards the inside of the corresponding concave area **7, 8, 9.**

After the above-mentioned lifting operation, the strip **10, 11, 12** and the areas of the shaped laminar body **3** adjacent to the cuts **4a, 5a, 6a** delimit a guide channel **13, 14, 15** developed parallel to the bending line **4, 5, 6,** suitable for slidingly housing one of the above-mentioned tubular elements **2.**

It can therefore be seen that the method of the invention allows the connection element **1** to be produced exclusively by means of cutting and bending operations and, therefore, without the need for welding.

Consequently, the method of the invention achieves the object of simplifying production of the connection element 1 with respect to the corner elements of known type.

Furthermore, the method of the invention is particularly suitable for use in order to produce a connection element 1 made of metallic material, in particular sheet steel.

Again advantageously, the absence of welded parts avoids the presence of weaker areas in the connection element **1,** increasing the resistance thereof.

The invention therefore achieves the object of obtaining a connection element **1** which is more robust than those of the known type made of metallic or plastic material.

Furthermore, since the strips **10, 11, 12** are connected to the shaped laminar body **3** at the level of the opposite edges **10a, 11 a, 12a,** the tubular elements **2** which are inserted in the respective guide channels **13, 14, 15** prevent the connection element **1** from moving apart along the bends, therefore increasing the rigidity thereof.

Preferably but not necessarily, the cuts **4a, 5a** and **6a** are in parallel pairs and have the same length.

In this way, the guide channels **13, 14, 15** present a substantially constant cross section and lateral edges substantially perpendicular with respect to the corresponding bending lines **4, 5, 6.**

Obviously, variant embodiments of the invention, not illustrated herein, can comprise a number of strips different from the one indicated above, on condition that each strip is delimited laterally by a pair of cuts intersecting a corresponding bending line **4, 5, 6.**

Preferably, each strip **10, 11, 12** is raised towards the inside of the corresponding concave area **7, 8, 9** simultaneously with the corresponding bending operation.

Advantageously, this allows each guide channel **13, 14, 15** to be obtained by means of one single bending operation, reducing the production time.

As can be seen in fig. 2, the shaped laminar body **3** presents a perimeter profile which defines a recess **20.**

The above-mentioned recess **20** is provided with an open side **20a** at the level of a portion **19** of the shaped laminar body **3** and extends at least as far as the point of intersection **16** of the bending lines **4, 5, 6.**

Therefore, the recess **20** divides the above-mentioned portion **19** into two separate edge portions **21** and **22,** opposing each other with respect to one of the above-mentioned bending lines which, preferably, is the first bending line **4.**

Obviously, the presence of the above-mentioned recess **20** allows the three bends to be made independently of one another, facilitating the production of the connection element **1.**

Preferably, in the two above-mentioned edge portions **21, 22** the respective shaped edges **21 a, 22a** adjacent to the recess **20** are configured so as to be arranged back to back following the above-mentioned bends, as can be seen in fig. 1.

Advantageously, the contact between the above-mentioned shaped edges **21a** and **22a** prevents crushing of the connection element **1** along the first bending line **4,** increasing the rigidity of the connection element **1.**

Again advantageously, the contact between the shaped edges **21a, 22a** allows them to be welded if it is necessary to further increase the robustness of the shaped element.

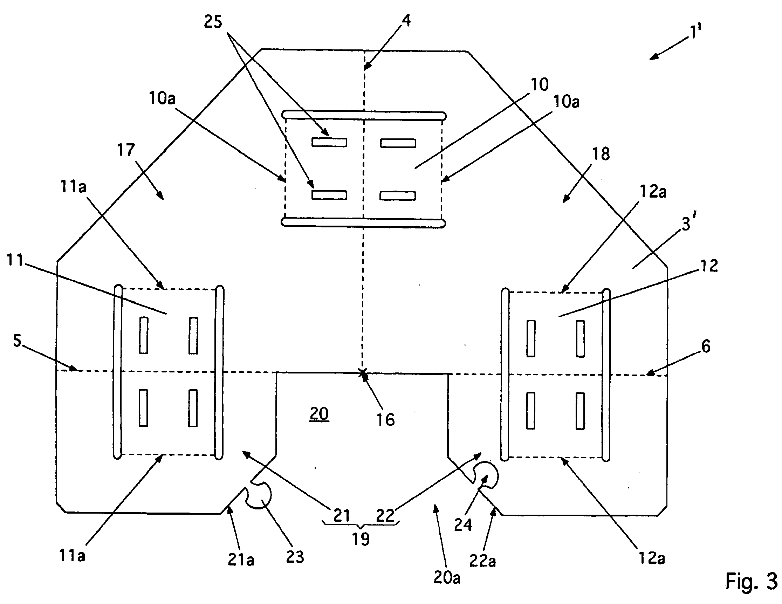

The embodiment of the connection element in accordance with the invention illustrated in fig. 3 and indicated therein as a whole by **1'** differs from the preceding one only due to the fact that the shaped edges **21a, 22a** of the two edge portions **21, 22** define corresponding matching shaped portions **23, 24** suitable for interlocking with each other during bending of the edge portions **21, 22.**

Advantageously, the above-mentioned joint prevents the shaped edges **21a, 22a** from moving apart, therefore improving the rigidity of the connection element **1'.**

The above-mentioned shaped portions comprise a projection **23** defined by the profile of the shaped edge **21a** of the edge portion **21,** which interlocks with a corresponding recess **24** defined by the profile of the shaped edge **22a** belonging to the other edge portion **22.**

To interlock the two shaped edges **21a, 22a** the method entails completion of the bending of the shaped laminar body **3'** along the first bending line **4** and, subsequently, completion of the bending of one of the above-mentioned edge portions **21** or **22** along the respective bending line **5**, **6.**

In this way, after the first bending operation, the two edge portions **21, 22** are in a mutual position such that, during their subsequent bending, the corresponding shaped edges **21a, 22a** interlock with each other.

Preferably but not necessarily, before performing the bending operation along the first bending line **4,** one of the edge portions **21** or **22** is bent completely along the respective bending line **5, 6,** while the other edge portion is bent partially and the bending is completed after bending along the first bending line **4.**

Preferably, in any one of the two variant embodiments **1, 1'** described above, each one of the strips **10, 11, 12** comprises one or more through holes **25** suited to house the end of a clamp for fixing a tubular element **2** after it has been inserted in the corresponding guide channel **13, 14, 15.**

The above-mentioned clamp can be a screw or an eccentric clamp, or of any known type.

In practice, to obtain any one of the two connection elements 1, **1'** described above, firstly the shaped laminar body **3, 3'** is provided, obtaining it for example via shearing a metal sheet.

Preferably, the cuts **4a, 5a, 6a** that define each strip **10, 11, 12,** as well as the through holes **25** for fixing the tubular elements **2,** are obtained simultaneously with the above-mentioned shearing process, ensuring rapidity of the operation. Obviously, in variant embodiments of the invention, the above-mentioned operations can be carried out at different times.

After the cuts **4a, 5a, 6a** have been made, the shaped laminar body **3, 3'** is bent along the three bending lines **4, 5, 6** and the strips are raised towards the inside of the concave areas **7, 8, 9** defined by the above-mentioned bends.

Once the bends have been completed and, where scheduled, the joint has been made between the projection **23** and the recess **24** of the two edge portions **21, 22,** the edge portions **21, 22** can be welded together at the level of the respective shaped edges **21a, 22a.**

The connection element **1, 1'** thus obtained can therefore be used to mutually connect three tubular elements **2** making up a structure, inserting each tubular element **2** in a corresponding guide channel **13, 14, 15** defined by each bend and by the corresponding raised strip **10, 11, 12.**

Obviously, in variant embodiments of the invention not illustrated herein, the connection element **1, 1'** can be configured so as to present any number of guide channels, on condition that they are produced as described above.

It is also obvious that, although the connection element **1** described and shown herein features three corners orthogonal to one another, variant embodiments can feature corners with a different angle, by appropriate arrangement of the bending lines **4, 5, 6.**

The above clearly shows that the method for producing the connection element described above and the connection element obtained via said method achieve all the pre-defined objects.

In particular, the method of the invention makes it possible to produce a sheet metal connection element which is more robust and can be obtained in a simpler manner than allowed by the known methods.

In fact, the method allows a connection element to be obtained which, unlike the corner elements of known type obtained by sheet metal bending, does not require any welding.

The absence of any welding allows a superior resistance to be obtained with respect to connection elements made in the same material and comprising welded parts.

Further variant embodiments of the invention, although not described herein and not shown in the drawings, must all be considered protected by the present patent, provided that they fall within the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Method for producing a corner element or a connection element (1; 1') suitable to mutually connect a plurality of tubular elements (2) making up a structure, comprising the following operations:
- providing a shaped laminar body (3; 3') in a material suitable for being plastically deformed;
- bending said shaped laminar body (3; 3') along three bending lines (4, 5, 6) converging in an intersection point (16) to delimit three corresponding portions (17, 18, 19) of said shaped laminar body (3; 3'), so as to define corresponding concave areas (7, 8, 9) suitable for housing said tubular elements (2);
- making in said shaped laminar body (3; 3') two cuts (4a, 5a, 6a) mainly developed according to corresponding trajectories intersecting at least one of said bending lines (4, 5, 6), so as to laterally delimiting a corresponding strip (10, 11, 12) of material which remains connected to said shaped laminar body (3; 3') at the level of two opposite edges (10a, 11 a, 12a);
- lifting said strip (10, 11, 12) towards the inside of the concave area (7, 8, 9) defined by the corresponding bending line (4, 5, 6), so that said strip (10, 11, 12) and the areas of said shaped laminar body (3; 3') adjacent to said cuts (4a, 5a, 6a) delimit a guide channel (13, 14, 15) developed parallel to said bending line (4, 5, 6), suitable for slidingly housing one of said tubular elements (2);
the perimeter profile of said shaped laminar body (3; 3') defining a recess (20) provided with an open side (20a) at the level of one of said portions (19), extending at least as far as said intersection point (16) to divide said portion (19) into two edge portions (21, 22) separated and opposing each other with respect to a first one of said bending lines (4), one of said two edge portions (21, 22) having a shaped edge (21 a, 22a) adjacent to said recess (20) and configured so as to be arranged against the corresponding shaped edge (21 a, 22a) of the other edge portion (21, 22) after said bending operations, **characterized in that** the shaped edge (21 a, 22a) of one of said edge portions (21, 22) comprises a projection (23) suited to be fitted in a corresponding recess (24) belonging to the shaped edge (21 a, 22a) of the other edge portion (21, 22) during the bending of said edge portions (21, 22), said method comprising the operation of fitting said projection (23) into said recess (24).

2. Method according to claim 1), **characterized in that** said lifting operation is carried out simultaneously with the corresponding bending operation.

3. Method according to any one of the preceding claims, **characterized in that** the bending of at least one of said edge portions (21, 22) is carried out at least partially after completion of the bending along said first bending line (4).

4. Method according to any one of the preceding claims, **characterized in that** said shaped laminar body (3) has a perimeter profile that is symmetrical with respect to said first bending line (4), the remaining two bending lines (5, 6) being arranged symmetrically with respect to said first bending line (4).

5. Method according to any one of the preceding claims, **characterized in that** each one of said strips (10, 11, 12) comprises a through hole (25) suitable for allowing one of said tubular elements (2) to be fixed after it has been inserted in the corresponding guide channel (13, 14, 15).

6. Method according to any one of the preceding claims, **characterized in that** said shaped laminar body (3; 3') is obtained by shearing a metal sheet.

7. Shaped laminar body (3; 3') in a plastically deformable material for use in a method according to claim 1), suited to be bent along three predefined bending lines (4, 5, 6) converging in an intersection point (16) to delimit three corresponding portions (17, 18, 19) of said shaped laminar body (3; 3'), said shaped laminar body (3; 3') comprising:
- two cuts (4a, 5a, 6a) mainly developed according to corresponding trajectories intersecting at least one of said bending lines (4, 5, 6), so as to laterally delimiting a corresponding strip (10, 11, 12) of material which remains connected to said shaped laminar body (3; 3') at the level of two opposite edges (10a, 11 a, 12a);
- a perimeter profile defining a recess (20) provided with an open side (20a) at the level of one of said portions (19), extending at least as far as said intersection point (16) to divide said portion (19) into two edge portions (21, 22) separated and opposing each other with respect to a first one of said bending lines (4), one of said two edge portions (21, 22) having a shaped edge (21 a, 22a) adjacent to said recess (20) and configured so as to be arranged against the corresponding shaped edge (21 a, 22a) of the other edge portion (21, 22) after said bending operations,
**characterized in that** the shaped edge (21 a, 22a) of one of said edge portions (21, 22) comprises a projection (23) suited to be fitted in a corresponding recess (24) belonging to the shaped edge (21 a, 22a) of the other edge portion (21, 22) during the bending of said edge portions (21, 22) along the corresponding bending lines (4, 5, 6).

8. Corner element or connection element (1; 1') of a plurality of tubular elements (2) making up a structure, **characterized in that** it can be obtained by means of a method according to any one of claims 1-6.

## Patentansprüche

1. Methode zur Herstellung eines Eckelements oder eines Verbindungselements (1; 1'), dazu geeignet, eine Vielzahl röhrenförmiger Elemente (2) miteinander zu verbinden und so eine Struktur zu bilden, folgende Vorgänge umfassend:
- Beschaffung eines geformten, blätterförmigen Körpers (3; 3') aus einem plastisch verformbaren Material;
- Biegen des besagten geformten, blätterförmigen Körpers (3; 3') entlang dreier Biegelinien (4, 5, 6), die in einem Schnittpunkt (16) konvergieren, um drei entsprechende Abschnitte (17, 18, 19) des besagten geformten, blätterförmigen Körpers (3; 3') zu begrenzen, um entsprechende, konkave Bereiche (7, 8, 9) für die Aufnahme der besagten, röhrenförmigen Elemente (2) zu definieren;
- Ausführung in dem besagten geformten, blätterförmigen Körper (3; 3') von zwei überwiegend gemäß entsprechenden Trajektorien, die wenigstens eine der besagten Biegelinien (4, 5, 6) schneiden, verlaufenden Schnitten (4a, 5a, 6a), so dass sie seitlich einen entsprechenden Streifen (10, 11, 12) aus Material begrenzen, der auf Höhe von zwei einander entgegengesetzten Kanten (10a, 11a, 12a) mit dem besagten geformten, blätterförmigen Körper (3; 3') verbunden bleibt;
- Anheben des besagten Streifens (10, 11, 12) zum Inneren des konkaven Bereichs (7, 8, 9) hin, der durch die entsprechende Biegelinie (4, 5, 6) definiert ist, so dass der besagte Streifen (10, 11, 12) und die Bereiche des besagten geformten, blätterförmigen Körpers (3; 3'), die an die besagten Schnitte (4a, 5a, 6a) angrenzen, einen Führungskanal (13, 14, 15) begrenzen, der parallel zu der besagten Biegelinie (4, 5, 6) verläuft, dazu geeignet, eines der besagte, röhrenförmigen Elemente (2) gleitend aufzunehmen;
wobei das Umfangsprofil des besagten geformten, blätterförmigen Körpers (3; 3') eine Aussparung (20) mit einer offenen Seite (20a) auf Ebene eines der besagten Abschnitte (19) definiert, die sich wenigstens bis zu dem besagten Schnittpunkt (16) erstreckt, um den besagten Abschnitt (19) in zwei Kantenabschnitte (21, 22) zu teilen, die voneinander getrennt sind und einander bezüglich einer ersten der besagten Biegelinien (4) gegenüberliegen, wobei einer der besagten Kantenabschnitte (21, 22) eine geformte Kante (21 a, 22a) aufweist, die an die besagte Aussparung (20) angrenzt und so konfiguriert ist, dass sie nach den besagten Biegevorgängen an der entsprechenden, geformten Kante (21 a, 22a) des anderen Kantenabschnitts (21, 22) anliegend positioniert wird,
**dadurch gekennzeichnet, dass** die geformte Kante (21 a, 22a) eines der besagten Kantenabschnitte (21, 22) einen Vorsprung (23) umfasst, der dazu geeignet ist, während des Biegens der besagten Kantenabschnitte (21, 22) in eine entsprechende, zu der geformten Kante (21 a, 22a) des anderen Kantenabschnitts (21, 22) gehörende Aussparung (24) eingepasst zu werden, wobei die besagte Methode den Vorgang des Einpassens des besagten Vorsprungs (23) in die besagte Aussparung (24) umfasst.

2. Methode gemäß Patentanspruch 1), **dadurch gekennzeichnet, dass** der besagte Anhebevorgang gleichzeitig mit dem entsprechenden Biegevorgang ausgeführt wird.

3. Methode gemäß eines jeden der vorstehenden Patentansprüche, **dadurch gekennzeichnet, dass** das Biegen von wenigstens eines der besagten Kantenabschnitte (21, 22) wenigstens teilweise nach dem Abschluss des Biegens entlang der besagten, ersten Biegelinie (4) ausgeführt wird.

4. Methode gemäß eines jeden der vorstehenden Patentansprüche, **dadurch gekennzeichnet, dass** der besagte geformte, blätterförmige Körper (3) ein Umfangsprofil aufweist, das bezüglich der ersten Biegelinie (4) symmetrisch ist, während die verbleibenden zwei Biegelinien (5, 6) bezüglich der besagten, ersten Biegelinie (4) symmetrisch angeordnet ist.

5. Methode gemäß eines jeden der vorstehenden Patentansprüche, **dadurch gekennzeichnet, dass** jeder der zwei Streifen (10, 11, 12) eine Durchgangsbohrung (25) umfasst, die geeignet ist, die Befestigung eines der besagten, röhrenförmigen Elemente (2) zuzulassen, nachdem es in den entsprechenden Führungskanal eingesetzt wurde (13, 14, 15).

6. Methode gemäß eines jeden der vorstehenden Patentansprüche, **dadurch gekennzeichnet, dass** der besagte geformte, blätterförmige Körper (3; 3') durch Scheren eines Metallblechs erzielt wird.

7. Geformter, blätterförmiger Körper (3; 3') aus plastisch verformbarem Material für die Verwendung mit einer Methode gemäß Patentanspruch 1), dazu geeignet, entlang dreier vorbestimmter Biegelinien (4, 5, 6), die in einem Schnittpunkt (16) konvergieren, um drei entsprechende Abschnitte (17, 18, 19) des besagten geformten, blätterförmigen Körpers (3; 3') zu begrenzen, gebogen zu werden, wobei der besagte geformte, blätterförmige Körper (3; 3') Folgendes umfasst:
- zwei Schnitte (4a, 5a, 6a), die überwiegend gemäß entsprechenden Trajektorien, die wenigstens eine der besagten Biegelinien (4, 5, 6) schneiden, verlaufen, so dass sie seitlich einen entsprechenden Streifen (10, 11, 12) aus Material begrenzen, der auf Höhe von zwei einander entgegengesetzten Kanten (10a, 11a, 12a) mit dem besagten geformten, blätterförmigen Körper (3; 3') verbunden bleibt;
- ein Umfangsprofil, das auf Höhe eines der besagten Abschnitte (19) eine Aussparung (20) mit einer offenen Seite (20a) aufweist, die sich wenigstens bis zu dem besagten Schnittpunkt (16) erstreckt, um den besagten Abschnitt (19) in zwei Kantenabschnitte (21, 22) zu teilen, die voneinander getrennt sind und einander bezüglich einer ersten der besagten Biegelinien (4) gegenüberliegen, wobei einer der besagten Kantenabschnitte (21, 22) eine geformte Kante (21 a, 22a) aufweist, die an die besagte Aussparung (20) angrenzt und so konfiguriert ist, dass sie nach den besagten Biegevorgängen an der entsprechenden, geformten Kante (21 a, 22a) des anderen Kantenabschnitts (21, 22) anliegend positioniert wird,
**dadurch gekennzeichnet, dass** die geformte Kante (21 a, 22a) eines der besagten Kantenabschnitte (21, 22) einen Vorsprung (23) umfasst, der dazu geeignet ist, während des Biegens des besagten Kantenabschnitts (21, 22) entlang der entsprechenden Biegelinien (4, 5, 6) in eine entsprechende, zu der geformten Kante (21 a, 22a) des anderen Kantenabschnitts (21, 22) gehörende Aussparung (24) eingepasst zu werden.

8. Eckelement oder Verbindungselement (1; 1') einer Vielzahl röhrenförmiger Elemente (2), die eine Struktur bilden, **dadurch gekennzeichnet, dass** es mittels einer Methode gemäß eines jeden der vorstehenden Patentansprüche von 1) bis 6) erzielt werden kann.

## Revendications

1. Méthode pour la production d'un élément de coin ou un élément de raccordement (1; 1') apte à relier entre eux une pluralité d'éléments tubulaires (2) qui composent une structure, comprenant les opérations suivantes:
- préparation d'un corps laminaire galbé (3; 3') en un matériel indiqué pour être déformé plastiquement;
- pliage dudit corps laminaire galbé (3; 3') le long de trois lignes de pliage (4, 5, 6) convergeant dans un point d'intersection (16) pour délimiter trois portions correspondantes (17, 18, 19) dudit corps laminaire galbé (3; 3'), de façon à définir des zones concaves correspondantes (7, 8, 9) aptes à accueillir lesdits éléments tubulaires (2);
- réalisation dans ledit corps laminaire galbé (3; 3') de deux coupes (4a, 5a, 6a) développés principalement selon des trajectoires correspondantes qui coupent au moins une desdites lignes de pliage (4, 5, 6), de façon à délimiter latéralement une bande correspondante (10, 11, 12) de matériel qui reste reliée audit corps laminaire galbé (3; 3') à hauteur de deux bords opposés (10a, 11a, 12a);
- levage de ladite bande (10, 11, 12) vers la partie intérieure de la zone concave (7, 8, 9) définie par la ligne de pliage correspondante (4, 5, 6), de façon à ce que ladite bande (10, 11, 12) et les zones dudit corps laminaire galbé (3; 3') adjacentes auxdites coupes (4a, 5a, 6a) délimitent un canal de guidage (13, 14, 15) développé parallèlement à ladite ligne de pliage (4, 5, 6) apte à accueillir de manière coulissante un desdits éléments tubulaires (2);
le profil de périmètre dudit corps laminaire galbé (3; 3') définissant une cavité (20) qui est dotée d'un côté ouvert (20a) à hauteur d'une desdites portions (19) et qui s'étend au moins jusqu'audit point d'intersection (16) pour diviser ladite portion (19) en deux parties de bord (21, 22) séparées et opposées entre elles par rapport à une première desdites lignes de pliage (4), une desdites deux parties de bord (21, 22) présentant un bord galbé (21 a, 22a) adjacent à ladite cavité (20) et configuré de façon à se disposer contre le bord galbé correspondant (21 a, 22a) de l'autre partie de bord (21, 22) après lesdites opérations de pliage,
**caractérisée en ce que** le bord galbé (21 a, 22a) d'une desdites parties de bord (21, 22) comprend une saillie (23) apte à s'encastrer dans une cavité correspondante (24) appartenant au bord galbé (21 a, 22a) de l'autre partie de bord (21, 22) durant le pliage desdites parties de bord (21, 22), ladite méthode comprenant l'opération d'encastrement de ladite saillie (23) dans ladite cavité (24).

2. Méthode selon la revendication 1), **caractérisée en ce que** ladite opération de levage est réalisée simultanément à l'opération de pliage correspondante.

3. Méthode selon l'une quelconque des revendications précédentes, **caractérisée en ce que** le pliage d'au moins une desdites parties de bord (21, 22) est effectué au moins partiellement après avoir terminé le pliage le long de ladite ligne de pliage (4).

4. Méthode selon l'une quelconque des revendications précédentes, **caractérisée en ce que** ledit corps laminaire galbé (3) présente un profil de périmètre qui est symétrique par rapport à ladite première ligne de pliage (4), les deux lignes de pliage restantes (5, 6) étant disposées symétriquement par rapport à ladite première ligne de pliage (4).

5. Méthode selon l'une quelconque des revendications précédentes, **caractérisée en ce que** chacune desdites bandes (10, 11, 12) comprend un trou passant (25) apte à consentir la fixation d'un desdits éléments tubulaires (2) après qu'il a été inséré dans le canal de guidage correspondant (13, 14, 15).

6. Méthode selon l'une quelconque des revendications précédentes, **caractérisée en ce que** ledit corps laminaire galbé (3; 3') est obtenu par découpe d'une tôle métallique.

7. Corps laminaire galbé (3; 3') en un matériel déformable plastiquement pour l'usage dans une méthode selon la revendication 1), apte à être plié le long de trois lignes de pliage prédéfinies (4, 5, 6) en convergeant dans un point d'intersection (16) pour délimiter trois portions correspondantes (17, 18, 19) dudit corps laminaire galbé (3; 3'), ledit corps laminaire galbé (3; 3') comprenant:
- deux coupes (4a, 5a, 6a) développées essentiellement selon des trajectoires correspondantes qui coupent au moins une desdites lignes de pliage (4, 5, 6), de façon à délimiter latéralement une bande correspondante (10, 11, 12) de matériel qui reste reliée audit corps laminaire galbé (3; 3') à hauteur de deux bords opposés (10a, 11 a, 12a);
- un profil de périmètre définissant une cavité (20) dotée d'un côté ouvert (20a) à hauteur d'une desdites portions (19), qui s'étend au moins jusqu'audit point d'intersection (16) pour diviser ladite portion (19) en deux parties de bord (21, 22) séparées et opposées entre elles par rapport à une première desdites lignes de pliage (4), une desdites deux parties de bord (21, 22) présentant un bord galbé (21 a, 22a) adjacent à ladite cavité (20) et configuré de façon à se disposer contre le bord galbé correspondant (21 a, 22a) de l'autre partie de bord (21, 22) après lesdites opérations de pliage,
**caractérisé en ce que** le bord galbé (21 a, 22a) d'une desdites parties de bord (21, 22) comprend une saillie (23) apte à s'encastrer dans une cavité correspondante (24) appartenant au bord galbé (21 a, 22a) de l'autre partie de bord (21, 22) durant le pliage desdites parties de bord (21, 22) le long des lignes de pliage correspondantes (4, 5, 6).

8. Élément de coin ou élément de raccordement (1; 1') d'une pluralité d'éléments tubulaires (2) qui composent une structure, **caractérisé en ce qu'**il peut être obtenu par une méthode selon l'une quelconque des revendications de 1 à 6.
